(19)

Europäisches
Patentamt
European
Patent Office
Office européen
des brevets

(11)     **EP 2 408 097 A1**

(12)                     **EUROPEAN PATENT APPLICATION**

(43) Date of publication:
**18.01.2012 Bulletin 2012/03**

(51) Int Cl.:
***H02M 3/335*** (2006.01)

(21) Application number: **10169229.1**

(22) Date of filing: **12.07.2010**

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**
Designated Extension States:
**BA ME RS**

(71) Applicant: **ABB Oy
00380 Helsinki (FI)**

(72) Inventors:
• **Suntio, Teuvo
37120 Nokia (FI)**

• **Nousiainen, Lari
33720 Tampere (FI)**

(74) Representative: **Valkeiskangas, Tapio Lassi
Paavali
Kolster Oy Ab
Iso Roobertinkatu 23
P.O. Box 148
00121 Helsinki (FI)**

(54)    **Current-fed converter**

(57)     A converter circuit comprising first and second input terminals (1, 2) for receiving input current from a current source, a first capacitor ($C_1$) connected between the first and second input terminals, a second capacitor ($C_2$), the first terminal of which is connected to the second input terminal (2) and the second terminal of which forms a positive voltage node (3), first and third semiconductor components ($S_1$, $S_3$) connected in series between the first input terminal (1) and a positive voltage node (3), the midpoint between the series connection forming a first node (4), first inductive component ($L_1$) connected between the second input terminal (2) and first node (4),

second and fourth semiconductor components ($S_2$, $S_4$) connected in series in parallel with the series connection first and third semiconductor components ($S_1$, $S_3$), second inductive component ($L_2$), the first end of which is connected to a second node (5) formed between the second and fourth semiconductor components ($S_2$, $S_4$) and the second end of which produces first output terminal (6), the second output terminal (7) being formed of the first input terminal (1), the first and the third semiconductor components ($S_1$, $S_3$) being arranged to control the voltage ($U_{in}$) between the first and second input terminals (1, 2).

FIG 1

EP 2 408 097 A1

**Description**

FIELD OF THE INVENTION

The present invention relates to converters, and more particularly to current-fed converters.

BACKGROUND OF THE INVENTION

Converters are common electric apparatuses that are used for converting electricity from one form to another. Converters are typically used for rising or lowering voltage or current levels for adapting the voltage of a source to the voltage of the load.

Converters are also used in connection photovoltaic (PV) panels for supplying the power available from panel. The power may be supplied directly to an alternating voltage network, DC -voltage bus or to a power consuming load. Depending on the amount of PV cells or panels connected for supplying power, the voltage is either rised or lowered for supplying the load with appropriate voltage.

In connection with the PV systems the converter system also keeps the operating point of the panel at its maximum power point. A PV panel has a certain operating point at which the extracted power has its maximum. A maximum power point tracker (MPPT) calculates the operating point from measured current and voltage of the panel and gives a reference value for either output voltage or current of the panel. The control system of the converter controls the actual output value of the panel to the reference and the maximum available power is obtained from the panel. The MPPT calculates continuously the reference value and the control system adapts to this situation enabling continuous operation in the maximum power point regardless of the varying operating conditions.

Converter topologies can be roughly divided into current fed and voltage fed converters. In voltage fed converters the power source feeds a voltage to the input of the converter and in current fed converters the source feeds current to the input. Due to the constant-current nature of PV panels, the optimal interfacing of the panels can be implemented by using current fed converters. A current fed converter can operate within the whole range of the UI curve of the panel from the short-circuit to open-circuit conditions. In voltage-fed converter the operation can only be carried out at the voltages equal or higher than the maximum power point voltage.

BRIEF DESCRIPTION OF THE INVENTION

An object of the present invention is to provide a current fed converter structure having low losses and wide input voltage range. The object of the invention is achieved by a converter which is characterized by what is stated in the independent claim. The preferred embodiments of the invention are disclosed in the dependent claims.

The invention is based on the idea of using a current fed converter structure having a novel topology. The converter of the invention has a wide conversion ratio in view of the duty ratio of the converter. The topology of the converter can be used to extract the maximum power from a power source, such a photovoltaic panel. The topology can be used for supplying voltage to a DC bus or with back end inverter to an alternating voltage grid.

One of the advantages of the topology of the converter is that when connected via inverter part to the grid, the power fluctuations at twice the grid frequency are not visible at the input terminals of the converter, thus reducing the problems relating to the fluctuation of the PV panel operating point.

BRIEF DESCRIPTION OF THE DRAWINGS

In the following the invention will be described in greater detail by means of preferred embodiments with reference to the accompanying drawings, in which

Figure 1 illustrates the main circuit of the converter of the invention;
Figure 2 shows the converter of Figure 1 with current and voltage definitions;
Figure 3 shows the on-time circuit structure of the converter;
Figure 4 shows the off-time circuit structure of the converter;
Figure 5 shows approximate waveforms of voltages and currents;
Figure 6 shows the on-off-time circuit structure of the converter;
Figure 7 shows the off-on-time circuit structure of the converter;
Figure 8 shows an example of duty ratio and switch control signal generation;
Figure 9 shows approximate waveforms when d1 > d2;
Figure 10 shows approximate waveforms when d1 < d2;
Figure 11 shows main circuit setup of the converter according to an embodiment;

Figure 12 shows switching frequency averaged capacitor voltages at the grid connected operation;
Figure 13 shows switching frequency averaged inductor currents at the grid connected operation; and
Figure 14 shows waveforms of the grid variables.

DETAILED DESCRIPTION OF THE INVENTION

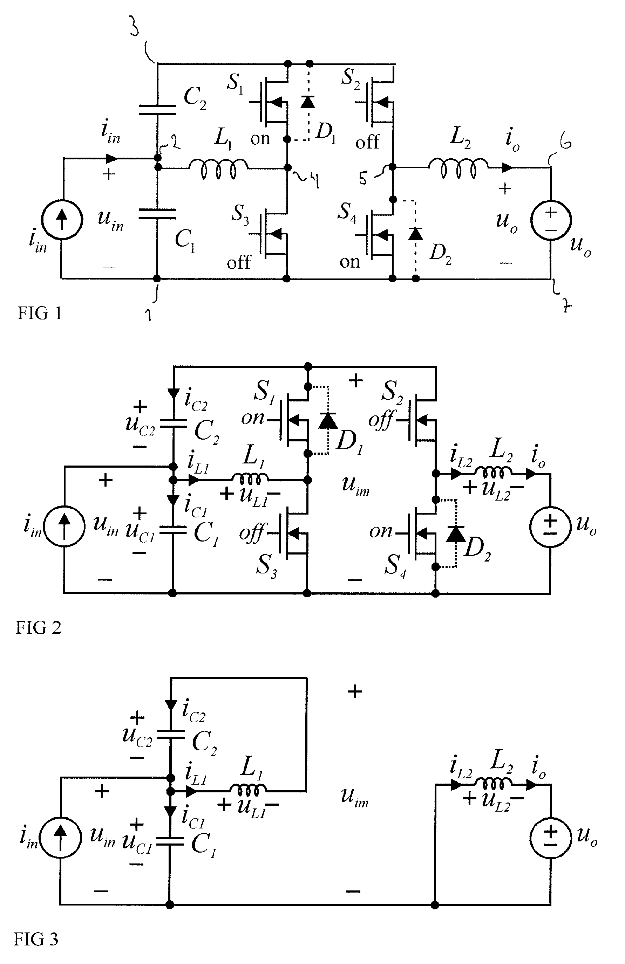

Figure 1 shows the circuit diagram of the current-fed superbuck-boost converter of the invention. In Figure 1 a current source is connected between first and second input terminals 1, 2 in parallel with capacitor $C_1$. Another capacitor $C_2$ is connected to the second input terminal and the other terminal of the capacitor $C_2$ forms a positive voltage node 3.

The converter further comprises a series connection of first and third semiconductor components $S_1$, $S_3$. The series connection is connected between the first input terminal 1 and the positive voltage node 3. The first semiconductor component is either a controlled switch component, such as FET-component, or a diode. The diode $D_3$ is illustrated in Figure 1 in dashed line and as mentioned, diode $D_3$ can substitute the switch component $S_1$. The third semiconductor component is a controlled switch component. The polarities of the components are such that when turned on, the current can flow through the components from the positive voltage node towards the first input terminal, thus the voltage from the positive voltage node is blocked.

The midpoint between the semiconductor components $S_1$ and $S_3$ is denoted as the first node 4 for the simplicity of the description. A first inductive component $L_1$ is connected between the second input terminal 2 and the first node 4.

Further, the converter of Figure 1 comprises second and fourth semiconductor components $S_2$, $S_4$ connected in series. The series connection is connected in parallel with the first and third semiconductor components with similar polarities. As with the first and third semiconductors, the both components $S_2$ and $S_4$ may be controlled switches. As indicated in Figure 1, the fourth switch may be replaced with a diode $D_4$.

A first end of a second inductive component $L_2$ is connected to the node between the second and fourth semiconductor components (second node 5). The second end 6 of the second inductive component $L_2$ is the first output terminal of the converter while the second output terminal 7 is formed of the first input terminal.

According to the invention, the first and third semiconductor components are arranged to control the voltage $u_{in}$ between the first and second input terminals 1 and 2 i.e. the input voltage. Since the converter is a current fed converter, the input current to the converter depends on the supplying source and the voltage is controlled with the switches to the voltage that suits the operation best.

The current-fed superbuck-boost converter shown in Figure 1 has steady-state conversion ratios such that the input current ($I_{in}$) is reflected to the output ($I_o$) multiplied by the duty ratio and divided by its complement (i.e., $M(D) = D/D'$) and the output voltage ($U_o$) to the input ($U_{in}$) with the same conversion ratio. The converter is a combination of buck ($S_1$, $S_3$) and boost ($S_2$, $S_4$) type-converters which can be controlled either separately (dual PWM mode) or together (single PWM mode). In the following, the operation of the converter is first studied in the single PWM mode operation and then in the dual PWM mode operation.

SINGLE PWM MODE

The power stage of the current-fed superbuck-boost converter is shown in Figure 2 with the defined components and the polarities of relevant currents and voltages. As mentioned above, the on-time switches $S_1$ and $S_4$ can be substituted also with diodes $D_1$ and $D_2$.

During the on-time, the switches $S_2$ and $S_3$ are off and the switches $S_1$ and $S_4$ are conducting yielding the on-time circuit structure given in Figure 2. During the off-time, the switches $S_2$ and $S_3$ are conducting and the switches $S_1$ and $S_4$ are off yielding the off-time circuit structure given in Figure 3.

During the on-time we can calculate applying Kirchhoff's laws that

$$u_{L1} = -u_{C2}$$
$$u_{L2} = -u_o$$
$$i_{C1} = i_{in}$$
$$i_{C2} = i_{L1}$$
$$u_{im} = u_{C1} + u_{C2}$$
$$u_{in} = u_{C1}$$
$$i_o = i_{L2}$$

(1)

During the off-time we can calculate applying Kirchhoff's laws that

$$u_{L1} = u_{C1}$$
$$u_{L2} = u_{C1} + u_{C2} - u_o$$
$$i_{C1} = i_{in} - i_{L1} - i_{L2}$$
$$i_{C2} = -i_{L2}$$
$$u_{im} = u_{C1} + u_{C2}$$
$$u_{in} = u_{C1}$$
$$i_o = i_{L2}$$

(2)

According to (1) and (2), the average voltages across the inductors and average currents through the capacitors as well as the average input voltage, intermediate voltage $u_{im}$, (i.e. the voltage of the series connection of capacitors $C_1$ and $C_2$) and output current become

$$\langle u_{L1} \rangle = (1-d)\langle u_{C1} \rangle - d\langle u_{C2} \rangle$$
$$\langle u_{L2} \rangle = (1-d)\langle u_{C1} \rangle + (1-d)\langle u_{C2} \rangle - \langle u_o \rangle$$
$$\langle i_{C1} \rangle = (d-1)\langle i_{L1} \rangle + (d-1)\langle i_{L2} \rangle + \langle i_{in} \rangle$$
$$\langle i_{C2} \rangle = d\langle i_{L1} \rangle + (d-1)\langle i_{L2} \rangle$$
$$\langle u_{im} \rangle = \langle u_{C1} \rangle + \langle u_{C2} \rangle$$
$$\langle u_{in} \rangle = \langle u_{C1} \rangle$$
$$\langle i_o \rangle = \langle i_{L2} \rangle$$

(3)

In the above set of equations, the subscripts denote the component the current or voltage of which is denoted by the equation in question. In order to maintain flux linkage and charge balances, the average voltages across the inductors and average currents through the capacitors have to be zero. According to these principles and defining D'=1-D the operating-point-related steady-state variables become

$$I_{L1} = I_{in} \qquad I_{L2} = \frac{D}{D'}I_{in}$$

$$U_{C1} = \frac{D}{D'}U_o \qquad U_{C2} = U_o$$

$$U_{im} = \frac{1}{D'}U_o \qquad\qquad\qquad\qquad (4)$$

$$U_{in} = \frac{D}{D'}U_o$$

$$I_o = \frac{D}{D'}I_{in}$$

which indicates that the input current is reflected to the output multiplied by the duty ratio and divided by its complement (i.e. $M(D) = D/D'$), and the output voltage to the input with the same conversion ratio. The output voltage is reflected to the intermediate voltage $u_{im}$ divided by the complement of the duty ratio. The switching frequency of the converter is assumed to be $f_s$ and consequently, the cycle time $T_s = 1/f_s$ The duty cycle $D = T_{on}/T_{off}$ and therefore, the length of on-time $T_{on} = DT_s$ and the length of off-time $T_{off} = D'T_s$ because $T_s = T_{on} + T_{off}$.

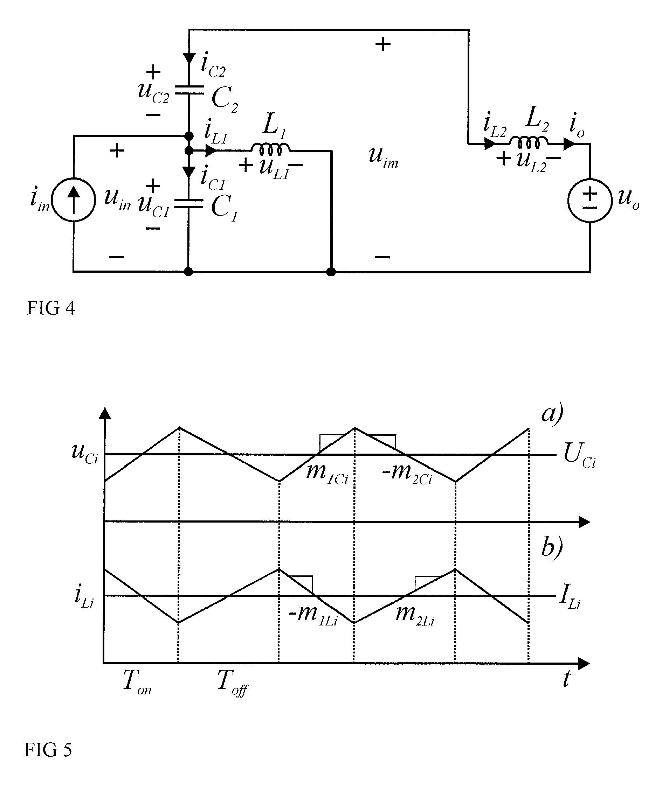

The approximate waveforms of the capacitor voltages and inductor currents are shown in Figure 5. The steady-state values are assumed to be large compared to the peak-to-peak ripple, i.e. only steady-state values affect the ripple slopes. The approximate waveform of the capacitor voltages is shown in Figure 5 as the curve a) exhibiting triangle shapes. The on-time and off-time slopes of the waveform are denoted by $m_{1Ci}$, and $-m_{2Ci}$ They can be given for the capacitor $C_1$ by $m_{1C1} = I_{in} / C_1$ and $m_{2C1} = DI_{in} / (D'C_1)$ as well as for the capacitor $C_2$ by $m_{1C2} = I_{in} / C_2$ and $m_{2C2} = DI_{in} / (D'C_2)$. According to the defined slopes, the peak-to-peak ripples associated to the capacitors can be determined by $\Delta u_{Ci-pp} = m_{1Ci}DT_s$. The average voltages are defined in (4). The selection of the capacitors can be based on the defined peak-to-peak ripple and average voltages.

The approximate waveform of the inductor currents is shown in Figure 5 as the curve b) exhibiting also triangle shapes. The on-time and off-time slopes of the waveform are denoted by $-m_{1Li}$ and $m_{2Li}$, They can be given for the inductor $L_1$ by $m_{1L1} = U_o / L_1$ and $m_{2L1} = DU_o / (D'L_1)$ as well as for the inductor $L_2$ by $m_{1L2} = U_o / L_2$ and $m_{2L2} = DU_o / (D'L_2)$. The corresponding peak-to-peak ripple currents can be given by $\Delta i_{Li-pp} = m_{1Li}DT_s$ and the corresponding average currents are defined in Error! Reference source not found.. The selection of the inductors can be based on the defined peak-to-peak ripple and average currents.

When the converter operated in the single PWM mode feeds a DC voltage bus, the control may be carried out in the following manner. Supposing that the power supply feeding the converter is a photovoltaic panel, a maximum power point tracker is used for extracting the maximum available power. The input current and voltage to the converter are measured. These measurements are fed to MPPT device which outputs a reference for the input voltage. The input voltage reference and the measured voltage are fed to a voltage controller which controls the voltage to the desired value by controlling the pulse ratio of the switches to a suitable value.

Preferably the output voltage of the converter is limited to a maximum value. If the converter produces higher voltage than the limit, the voltage is lowered by changing the operation point of the converter. This can be carried out by changing the input voltage reference so that the converter no longer operates at the maximum power point. To achieve this, the measured output voltage and the value of the maximum output voltage are fed to a controller, and once the measured voltage exceeds the limit, the controller outputs a control term that is subtracted from the value produced by the MPPT. Of course, other measures can also be used for limiting the output voltage to a suitable level.

DUAL PWM MODE

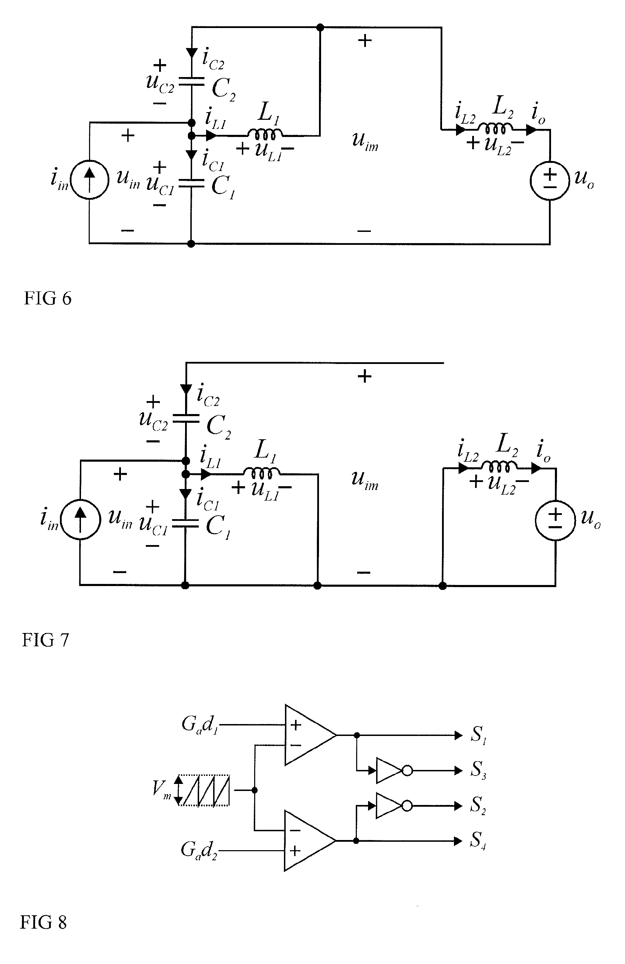

In the dual PWM mode duty ratios of the superbuck and boost switch pairs ($S_1, S_3$ and $S_2, S_4$ , respectively) are controlled separately, allowing for example dedicated control systems for the output current and input voltage as well as separate control of the intermediate voltage. Besides the on- and off-times of the single PWM converter, the circuit can exhibit two extra states denoted as on-off- and off-on-times. During the on-off-time, the switches $S_3$ and $S_4$ are off and the switches $S_1$ and $S_2$ are conducting yielding the on-off-time circuit structure given in Figure 6. During the off-on-time, the switches $S_3$ and $S_4$ are conducting and the switches $S_1$ and $S_2$ are off yielding the off-on-time circuit structure given in Figure 7.

During the on-off-time we can calculate applying Kirchhoff's laws that

$$u_{L1} = -u_{C2}$$
$$u_{L2} = u_{C1} + u_{C2} - u_o$$
$$i_{C1} = i_{in} - i_{L2}$$
$$i_{C2} = i_{L1} - i_{L2} \tag{5}$$
$$u_{im} = u_{C1} + u_{C2}$$
$$u_{in} = u_{C1}$$
$$i_o = i_{L2}$$

During the off-on-time we can calculate applying Kirchhoff's laws that

$$u_{L1} = u_{C1}$$
$$u_{L2} = -u_o$$
$$i_{C1} = i_{in} - i_{L1}$$
$$i_{C2} = 0 \tag{6}$$
$$u_{im} = u_{C1} + u_{C2}$$
$$u_{in} = u_{C1}$$
$$i_o = i_{L2}$$

In order to solve the average voltages across the inductors, average currents through the capacitors as well as average input voltage, intermediate voltage and output current, we assume synchronous PWM generation. The switching frequencies are assumed equal as well as the beginning of the on-times. The synchronous PWM generation is realised either by digital control system or comparing the control signals to the same PWM-ramp in analog modulator as depicted in Figure 8, where $G_a$ is the modulator related gain $1/V_m$ and $V_m$ is the peak-to-peak value of the PWM-ramp slope, scaling $d_1$ and $d_2$ between zero and one.

According to Figure 8 an extra state appears between on- and off-times when $d_1 \neq d_2$. If $d_1 > d_2$, the extra state is the on-off-time and if $d_1 < d_2$, the extra state is the off-on-time. Now the needed average values can be solved by common average integrals where $T_s$ is the cycle time. For $d_1 < d_2$ we get

$$\langle u_{L1} \rangle = \frac{1}{T_s} \left( \int_0^{d_1 T_s} -u_{C2} dt + \int_{d_1 T_s}^{d_2 T_s} u_{C1} dt + \int_{d_2 T_s}^{T_s} u_{C1} dt \right)$$

$$\langle u_{L2} \rangle = \frac{1}{T_s} \left( \int_0^{d_1 T_s} -u_o dt + \int_{d_1 T_s}^{d_2 T_s} -u_o dt + \int_{d_2 T_s}^{T_s} \left( u_{C1} + u_{C2} - u_o \right) dt \right)$$

$$\langle i_{C1} \rangle = \frac{1}{T_s} \left( \int_0^{d_1 T_s} i_{in} dt + \int_{d_1 T_s}^{d_2 T_s} \left( i_{in} - i_{L1} \right) dt + \int_{d_2 T_s}^{T_s} \left( i_{in} - i_{L1} - i_{L2} \right) dt \right)$$

$$\langle i_{C2} \rangle = \frac{1}{T_s} \left( \int_0^{d_1 T_s} i_{L1} dt + \int_{d_1 T_s}^{d_2 T_s} 0 \, dt + \int_{d_2 T_s}^{T_s} -i_{L2} dt \right) \qquad (7)$$

$$\langle u_{im} \rangle = \langle u_{C1} \rangle + \langle u_{C2} \rangle$$

$$\langle u_{in} \rangle = \langle u_{C1} \rangle$$

$$\langle i_o \rangle = \langle i_{L2} \rangle$$

For $d_1 > d_2$ we get

$$\langle u_{L1} \rangle = \frac{1}{T_s} \left( \int_0^{d_2 T_s} -u_{C2} dt + \int_{d_2 T_s}^{d_1 T_s} -u_{C2} dt + \int_{d_1 T_s}^{T_s} u_{C1} dt \right)$$

$$\langle u_{L2} \rangle = \frac{1}{T_s} \left( \int_0^{d_2 T_s} -u_o dt + \int_{d_2 T_s}^{d_1 T_s} \left( u_{C1} + u_{C2} - u_o \right) dt + \int_{d_1 T_s}^{T_s} \left( u_{C1} + u_{C2} - u_o \right) dt \right)$$

$$\langle i_{C1} \rangle = \frac{1}{T_s} \left( \int_0^{d_2 T_s} i_{in} dt + \int_{d_2 T_s}^{d_1 T_s} \left( i_{in} - i_{L2} \right) dt + \int_{d_1 T_s}^{T_s} \left( i_{in} - i_{L1} - i_{L2} \right) dt \right)$$

$$\langle i_{C2} \rangle = \frac{1}{T_s} \left( \int_0^{d_2 T_s} i_{L1} dt + \int_{d_2 T_s}^{d_1 T_s} \left( i_{L1} - i_{L2} \right) dt + \int_{d_1 T_s}^{T_s} -i_{L2} dt \right) \qquad (8)$$

$$\langle u_{im} \rangle = \langle u_{C1} \rangle + \langle u_{C2} \rangle$$

$$\langle u_{in} \rangle = \langle u_{C1} \rangle$$

$$\langle i_o \rangle = \langle i_{L2} \rangle$$

Both (7) and (8) yield the same averages given by

$$\langle u_{L1} \rangle = (1 - d_1)\langle u_{C1} \rangle - d_1 \langle u_{C2} \rangle$$

$$\langle u_{L2} \rangle = (1 - d_2)\langle u_{C1} \rangle + (1 - d_2)\langle u_{C2} \rangle - \langle u_o \rangle$$

$$\langle i_{C1} \rangle = (d_1 - 1)\langle i_{L1} \rangle + (d_2 - 1)\langle i_{L2} \rangle + \langle i_{in} \rangle$$

$$\langle i_{C2} \rangle = d_1 \langle i_{L1} \rangle + (d_2 - 1)\langle i_{L2} \rangle \qquad (9)$$

$$\langle u_{im} \rangle = \langle u_{C1} \rangle + \langle u_{C2} \rangle$$

$$\langle u_{in} \rangle = \langle u_{C1} \rangle$$

$$\langle i_o \rangle = \langle i_{L2} \rangle$$

In order to maintain flux linkage and charge balances, the average voltages across the inductors and average currents through the capacitors have to be zero. According to these principles the operating-point-related steady-state variables become

$$I_{L1} = I_{in} \qquad I_{L2} = \frac{D_1}{D_2'} I_{in}$$

$$U_{C1} = \frac{D_1}{D_2'} U_o \qquad U_{C2} = \frac{D_1'}{D_2'} U_o$$

$$U_{im} = \frac{1}{D_2'} U_o \qquad (10)$$

$$U_{in} = \frac{D_1}{D_2'} U_o$$

$$I_o = \frac{D_1}{D_2'} I_{in}$$

when $D_2' = 1 - D_2$ and $D_1' = 1 - D_1$.

The steady-state operating point solution is similar to the single PWM case, but the duty ratios of the superbuck- and boost-parts are separated. It is also noted that now duty ratios has effect on $U_{C2}$. The switching frequency of the converter is again assumed to be $f_s$ and consequently, the cycle time $T_s = 1 / f_s$. When $d_1 > d_2$ the duty cycle $D_2 = T_{on} / (T_{on-off} + T_{off})$ and therefore, the length of on-time $T_{on} = D_2 T_s$ and the length of off-time $T_{off} = D_1' T_s$ because $T_s = T_{on} + T_{on-off} + T_{off}$ and $T_{on-off} = D_1 T_s - D_2 T_s$. When $d_1 < d_2$ the duty cycle $D_1 = T_{on} / (T_{off-on} + T_{off})$ and therefore, the length of on-time $T_{on} = D_1 T_s$ and the length of off-time $T_{off} = D_2' T_s$ because $T_s = T_{on} + T_{off-on} + T_{off}$ and $T_{off-on} = D_2 T_s - D_1 T_s$.

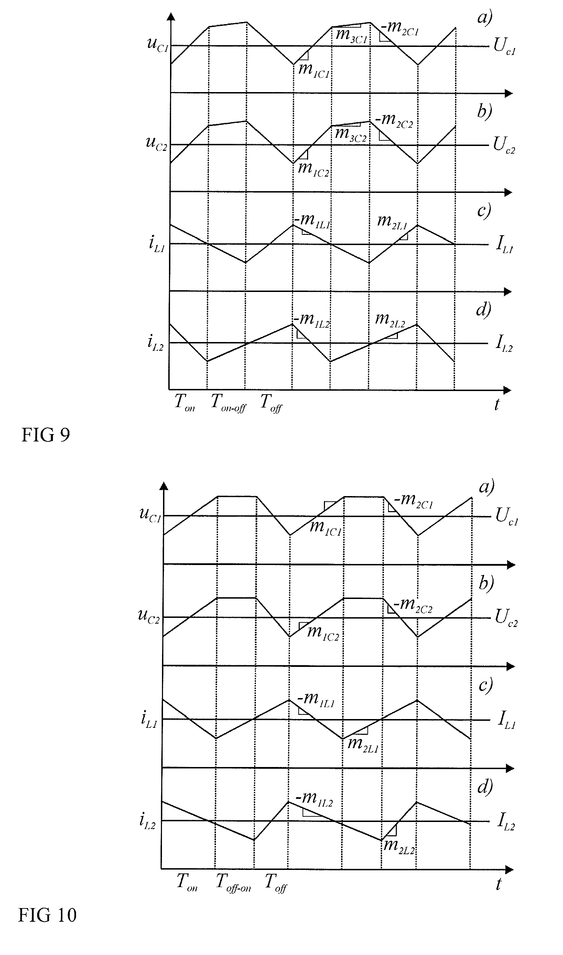

The approximate waveforms of the capacitor voltages and inductor currents are shown in Figure 9 and Figure 10 for the corresponding duty ratio relations. The steady-state values are assumed to be large compared to the peak-to-peak ripple, i.e. only steady-state values affect the ripple slopes. The capacitor voltage slopes shown in Figure 9 and Figure 10 as the curves a) and b) can be given for the capacitor $C_1$ by $m_{1c1} = I_{in} / C_1$, $m_{2C1} = D_1 I_{in} / (D_2 C_1)$ and $m_{3C1} = (1 - D_1 / D_2') I_{in} / C_1$ as well as for the capacitor $C_2$ by $m_{1C2} = I_{in} / C_2$, $m_{2C2} = D_1 I_{in} / (D_2 C_2)$ and $m_{3C2} = (1 - D_1 / D_2') I_{in} / C_2$

Note that the slopes $m_{3Ci}$ are negative if $D_1 > D_2'$. When $D_1 = D_2'$, the slopes $m_{3Ci}$ are approximately zero. The capacitor slopes are approximately zero also during the off-on-time. The peak-to-peak ripples associated to the capacitors can be determined according to the defined slopes. When $D_1 < D_2'$, $\Delta u_{Ci-pp} = m_{2Ci} T_{off}$ where [$T_{off} = D_1' / T_s$ when $d_1 > d_2$ and $T_{off} = D_2' T_s$ when $d_1 < d_2$. When $D_1 > D_2'$, $\Delta u_{Ci-pp} = m_{1Ci} T_{on}$ where $T_{on} = D_2 T_s$ when $d_1 > d_2$ and $T_{on} = D_1 T_s$ when $d_1 < d_2$. The average voltages are defined in (10). The selection of the capacitors can be based on the defined peak-to-peak ripple and average voltages.

The inductor current slopes shown in Figure 9 and Figure 10 as the curves c) and d) can be given for the inductor $L_1$ by $m_{iL1} = D_1' U_0 / (D_2' L_1)$ and $m_{2L1} = D_1 U_o (D_2' L_1)$ as well as for the inductor $L_2$ by $m_{1L2} = U_o / L_2$ and $m_{2L2}$

$= D_2U_o / (D'_2L_2)$, The corresponding peak-to-peak ripple currents can be given by $\Delta i_{Li'} = m_{1Li}T_{on'}$ where $T_{on} = D_2T_s$ when $d_1 > d_2$ and $T_{on} = D_1T_s$ when $d_1 < d_2$ . The average currents are defined in (10). The selection of the inductors can be based on the defined peak-to-peak ripple and average currents.

When the converter operated in the dual PWM mode feeds a DC voltage bus, the control may be carried out in the following manner. Supposing that the power supply feeding the converter is a photovoltaic panel, a maximum power point tracker is used for extracting the maximum available power. The input current and voltage to the converter are measured. These measurements are fed to an MPPT device, which outputs a reference for the input voltage. The input voltage reference and the measured voltage are fed to a voltage controller, which controls the voltage to the desired value by controlling the pulse ratio of the switches $S_1$ and $S_3$ to a suitable value.

As the switches $S_1$, $S_3$ and switches $S_2$, $S_4$ are modulated separately, the output voltage can be kept at a desired level by modulating the switches $S_2$ and $S_4$.

The above calculations and the waveforms were obtained with synchronized switching periods. It is, however, clear that the switches $S_1$, $S_3$ and $S_2$, $S_4$ can be modulated completely independently of each other, meaning that even the modulation frequency may not be the same for both switch pairs.

GRID INTERFACING

In the above the converter was described as providing voltage to a DC bus. In the following, the topology of the invention is used for supplying power to alternating grid thereby forming effectively an inverter. The transformerless inverter technology is considered to be a low-cost and feasible solution for interfacing solar generator into the grid. The main problems of such solutions are considered to be the high common-mode currents and the fluctuation of the input power at twice the line frequency causing safety problems and reducing the energy harvesting efficiency.

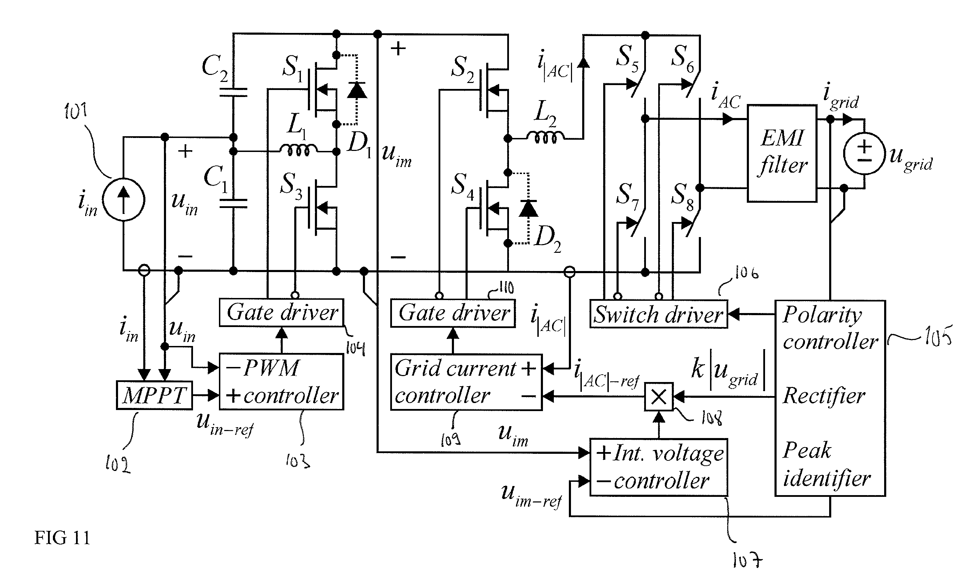

The converter according to an embodiment forms a single-phase current-fed solar inverter comprising a current-fed quadratic buck converter $S_1$, $S_3$ and boost converter $S_2$, $S_4$, a line-frequency inverter ($S_5$-$S_8$) and an EMI filter as shown in Figure 11.

The buck converter keeps its input voltage constant at the voltage determined by the MPPT device by applying negative feedback control. The boost converter supplies full-wave rectified sinus shaped output current corresponding to the maximum power the input source (i.e. e.g. solar generator) can provide. The boost converter keeps its input voltage (i.e. the voltage of the sum of the input capacitors) constant at a level needed for supplying the grid current and determined by the input-voltage-monitoring device. The level can be chosen to minimize the losses in the buck and boost converters. The |Ac| / AC inverter works in such a way that the switch pair ($S_5,S_7$) conducts during the line half cycle when the grid voltage is positive and the switch pair ($S_6,S_8$) conducts during the line half cycle when the grid voltage is negative. The switches ($S_5$ -$S_8$) can be implemented by several techniques including MOSFET, IGBT, silicon controlled rectifier, etc. The EMI filter consisting for example of a capacitor and inductor and connected at the output of the |*AC*|/ *AC* converter removes the switching-frequency noise from the output current.

The current-fed superbuck-boost converter integrated with a line-frequency inverter is a feasible solution for interfacing a solar generator into the single-phase grid without an isolation transformer. The output current of the superbuck-boost is shaped to resemble full-wave rectified grid voltage, which polarity is determined by the line-frequency inverter according to the grid voltage. The voltages imposed over parasitic capacitances from the input source to the neutral conductor are ideally free of high frequency noise, efficiently reducind ground leakage currents, which are considered the main problems in transformerless grid connected photovoltaic applications. The main circuit setup of the proposed inverter with the basic control functions is shown in Figure 11.

The common-mode voltage created by the proposed circuitry is free of high-frequency noise and half the grid voltage, which effectively reduces the common mode current. The input-voltage controlled of the buck converter effectively reduces the effect of the power fluctuation at the output of the input source down to zero. The intermediate voltage $u_{im}$ has to be controlled to be slightly higher than the peak grid voltage but can be optimized in respect to the power losses in the buck and boost stages. The input voltage of the buck converter has to be less than the intermediate voltage, and its minimum level is determined by the minimum usable duty ratio by $U_{in-min} = D_{min}U_{DC-max}$.

The dual PWM mode described above is used due to its advantages over the single PWM mode. The dedicated input voltage control efficiently reduces the effect of the output power fluctuation in the input with a modest increase in complexity. Smaller input capacitance is required while the energy harvesting efficiency is increased. The buck switch pair ($S_1,S_3$) is used to keep the input voltage constant at a level determined by the maximum power point tracking (MPPT) device by applying negative feedback control.

The boost switch pair ($S_2,S_4$) is used to deliver the full-wave rectified sinus shaped output current. It has been observed that high control bandwidths are hard to achieve under direct duty ratio control of the output current with current-fed converters. Dynamic analysis (not provided in this paper) of the dual PWM superbuck-boost converter reveals a right-half-plane (RHP) zero in the control-to-output related transfer functions of the boost-part limiting the control bandwidth. The RHP zero is a characteristic property of a boost converter, whether voltage-fed or current-fed. A positive feedback output current loop unstabilises the converter but allows high bandwidth current reference tracking while the intermediate voltage $U_{im}$ keeps at adequate levels. Now it can be observed that the converter may be stabilised by another positive feedback loop from the intermediate voltage. After addition of the current loop, the dynamic analysis reveals a RHP pole in the output-current-reference-to-intermediate-voltage transfer function. According to system theory, the converter is stable when the intermediate voltage loop bandwidth exceeds the RHP pole frequency. Naturally, the input voltage controller affects also the dynamics of the boost-part.

The intermediate voltage has to be kept at a level higher than the peak grid voltage. The grid voltage peak identifier determines the intermediate voltage reference to allow operation with various grid voltages. The level can be chosen to minimise the losses in the converter with a transient margin. The line-frequency inverter works in such a way that the switch pair $S_5, S_8$ conducts during the positive half of the grid voltage line cycle and the switch pair $S_6, S_7$ conducts during the line cycle half when the grid voltage is negative. Low conduction loss devices are recommended. The EMI filter connected at the output attenuates the switching frequency noise of the output current and ensures the EMC-compatibility of the inverter.

The control system of the inverter according to an embodiment is described next with reference to Figure 11. A current source 101, such as a photo voltaic panel, string or array, is connected to the input of the inverter. The current source produces input current $i_{in}$, which is measured together with the input voltage $U_{in}$. The measured values are fed to a maximum power point tracker 102, which calculates a reference value for the input voltage $U_{in-ref}$, When such a voltage is obtained to the input of the inverter, the PV panel is operated at is maximum power point and all available power is extracted from the panel.

The input voltage reference $U_{in-ref}$ is fed to a PWM controller 103 together with the measured input voltage $u_{in}$. The controller 103 produces a duty ratio for gate driver 104, which controls the switches $S_1$ and $S_3$ according to the obtained duty ratio for controlling the input voltage to correspond to the reference voltage. The switches $S_1$ and $S_3$ thus effectively control the input voltage to the reference voltage, which is obtained from the measured input current using an MPP algorithm.

In the inverter of the embodiment, the grid voltage $_{Ugrid}$ is also measured. The measured voltage value is fed to block 105. Block 105 serves as a polarity controller for the inverter which is synchronized to the grid voltage. The polarity controller outputs the information of the polarity of the grid voltage to switch driver 106 which controls switches $S_5$ and $S_8$ conductive when the grid voltage is positive and switches $S_6$ and $S_7$ conductive when the grid voltage is negative.

Block 105 also comprises a rectifier for obtaining the rectified sinusoidal shape of the grid voltage. The grid voltage is rectified and scaled by multiplying it with a constant k.

Further, block 105 includes a peak identifier, which identifies the amplitude of the grid voltage for producing a reference value $U_{im-ref}$ for the intermediate voltage. The intermediate voltage $u_{im}$ is measured and fed to an intermediate voltage controller 107 together with the reference value $u_{im-ref}$. The output of the voltage controller 107 is fed to a multiplier block 108 which multiplies said output and the scaled and rectified value of the grid voltage $k|u_{grid}|$ for producing a reference for the rectified value of grid current $i_{|AC|-ref}$. This reference value is fed to a grid current controller 109 which also receives measured grid current value $i_{|Ac|}$. The measured value is also rectified value since it is measured before the inverting switches. Grid current controller 109 outputs a pulse ratio for gate driver 110, which controls switches $S_2$ and $S_4$ according to the pulse ratio for keeping the intermediate voltage at its reference value and for producing a current having a rectified sinusoidal shape in synchronism with the grid voltage.

To easily demonstrate the low frequency behaviour of the inverter in Figure 1, time domain simulations in steady-state have been carried out with a switching frequency averaged model (i.e. the switching frequency ripple is removed from the waveforms). The parameters used in the simulation are listed in Table 1.

Table 1. Simulation parameters.

| $U_{in-ref}$ | $u_{im-ref}$ | $U_{grid}$ | $i_{in}$ | $C_1$ | $C_2$ | $C_3$ | $L_1$ | $L_2$ |
|---|---|---|---|---|---|---|---|---|
| 25V | 360V | 230V | 7.5A | 22μF | 440μF | 22μF | 220μH | 1mH |

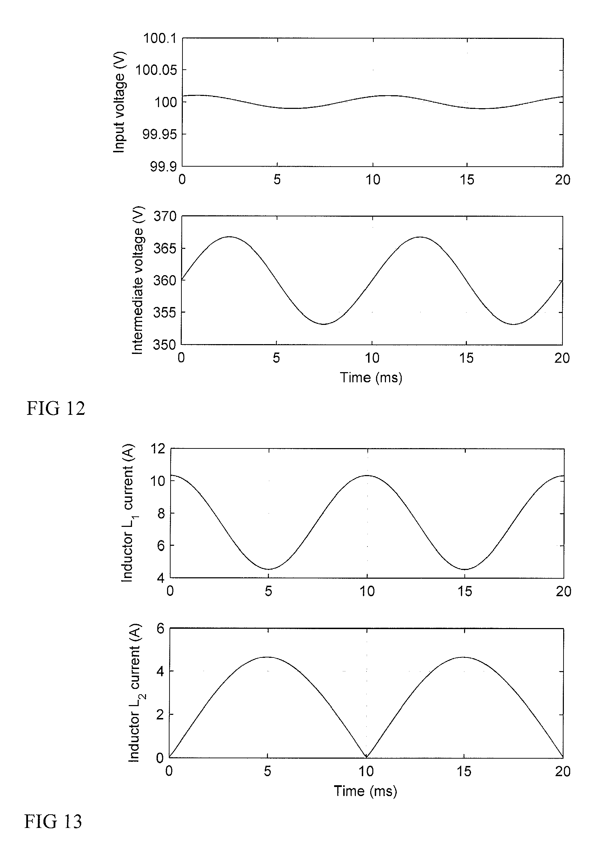

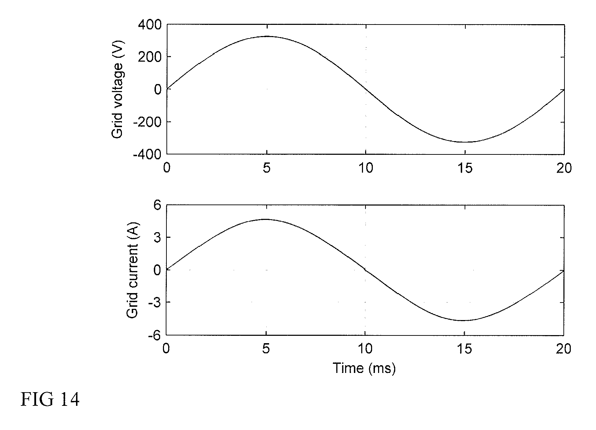

Figure 12 shows the input and intermediate voltages. As can be seen, the input voltage ripple at twice the grid frequency can be controlled to neglibly small values. The voltage ripple at the intermediate voltage is similar to the input voltage ripple in any common grid-connected single-phase photovoltaic inverter. The low-frequency ripple current of the capacitor $C_1$ is steered to the inductor $L_1$ as can be seen in Figure 13 with the full-wave-rectified shaped current of the inductor $L_2$. The resulting grid current with the grid voltage is shown in Figure 14.

In order to design the inverter properly, the low frequency ripples need to be solved. The switching frequency ripples were analysed above in connection with the converter structure. The variables in angle brackets are the switching frequency averaged values. The low frequency ripples can be approximated by calculating the power fluctuation caused by the sinusoidal grid variables. The grid current controller injects sinusoidal current to the grid at unity power factor.

The grid angular frequency is denoted by $\omega_0$. At steady-state

$$\left\langle p_{grid} \right\rangle = \sqrt{2}U_{grid}\sin\left(\omega_0 t\right)\sqrt{2}I_{grid}\sin(\omega_0 t) = 2P_{grid}\sin^2\left(\omega_0 t\right) \tag{11}$$

According to the trigonometric double-angle formulas $\sin^2(x)=(1-\cos(2x))/2$. Now it is clearly seen that the power fluctuates at twice the grid frequency. Given as a function of the input power and efficiency of the converter, denoted by $\eta$, steady-state grid power is

$$\left\langle p_{grid} \right\rangle = \eta P_{in}\left(1-\cos\left(2\omega_0 t\right)\right) \tag{12}$$

Since the input voltage controller keeps the input voltage constant, the average current through the capacitor $C_1$ is zero. Accordingly, the power fluctuation imposed low frequency current appears only through the capacitor $C_2$. At steady-state the dc-component must be zero in order to maintain the charge balance. If the ripple voltage over the capacitor $C_2$ is assumed small compared to the dc-component, we get (13) applying the current directions of Figure 2.

$$\left\langle i_{C2} \right\rangle = \frac{\eta P_{in}}{\left(U_{im}-U_{in}\right)}\cos\left(2\omega_0 t\right) \tag{13}$$

According to the basic circuit theory, the inductor voltages and capacitor currents can be presented as $u_L = L\dfrac{di_L}{dt}$ and $i_C = C\dfrac{du_C}{dt}$, respectively. The voltage ripple over the capacitor $C_2$, which is also the voltage ripple of the intermediate voltage, is

$$\left\langle u_{C2-ripple} \right\rangle = \frac{\eta P_{in}}{2\omega_0 C_2\left(U_{im}-U_{in}\right)}\sin\left(2\omega_0 t\right) \tag{14}$$

Since the input current is constant, $\langle i_{C1}\rangle = 0$ and $\langle i_{L1}\rangle = \langle i_{in}\rangle + \langle i_{C2}\rangle \langle i_{C1}\rangle$, the ripple current through the inductor $L_1$ is simply

$$\left\langle i_{L1-ripple} \right\rangle = \left\langle i_{C2} \right\rangle = \frac{\eta P_{in}}{\left(U_{im}-U_{in}\right)}\cos\left(2\omega_0 t\right) \tag{15}$$

In order to keep the input voltage constant and power flow towards the grid, the ripple current amplitude of the inductor $L_1$ must not exceed the input current.

It is to be understood that the converter also comprises means for controlling the semiconductor components. These means comprise suitable drive circuitry able to control the components to a conductive and blocking state. Drive circuitry includes for example auxiliary power sources, modulators and other peripheral circuits. It is also clear that the above-mentioned controller for current and voltage control are implemented in a manner known by a skilled person. Further, the maximum power point tracker used may be of any available type as long as it produces a reference value for the input voltage. In the above description, referring to drawings, some of the features are incorporated in blocks. It is clear that the functionality required for the invention can be structured in functional blocks other than the ones described above and in the drawings.

The converter of the invention is described above mainly in connection with a photovoltaic panel. It is clear that the power source feeding current to the current-fed converter may be of any other type, such as a superconducting magnetic energy storage (SMES).

It will be obvious to a person skilled in the art that, as the technology advances, the inventive concept can be implemented in various ways. The invention and its embodiments are not limited to the examples described above but may vary within the scope of the claims.

**Claims**

1.  A converter circuit comprising
    first and second input terminals (1, 2) for receiving input current from a current source,
    a first capacitor ($C_1$) connected between the first and second input terminals, **characterized in that** the converter further comprises
    a second capacitor ($C_2$), the first terminal of which is connected to the second input terminal (2) and the second terminal of which forms a positive voltage node (3),
    first and third semiconductor components ($S_1$, $S_3$) connected in series between the first input terminal (1) and a positive voltage node (3), the midpoint between the series connection forming a first node (4),
    first inductive component ($L_1$) connected between the second input terminal (2) and first node (4),
    second and fourth semiconductor components ($S_2$, $S_4$) connected in series in parallel with the series connection first and third semiconductor components ($S_1$, $S_3$),
    second inductive component ($L_2$), the first end of which is connected to a second node (5) formed between the second and fourth semiconductor components ($S_2$, $S_4$) and the second end of which produces first output terminal (6), the second output terminal (7) being formed of the first input terminal (1),
    the first and the third semiconductor components ($S_1$, $S_3$) being arranged to control the voltage ($U_{in}$) between the first and second input terminals (1, 2).

2.  A converter according to claim 1, **characterized in that** the first and the fourth semiconductor components ($S_1$, $S_4$) are diodes or switch components and second and third semiconductor components ($S_2$, $S_3$) are switch components.

3.  A converter according to claim 1 or 2, **characterized in that** the converter further comprises means for controlling the semiconductor components ($S_1$, $S_2$, $S_3$, $S_4$).

4.  A converter according to claim 1, 2 or 3, **characterized in that** the means for controlling the first and third semiconductor components is arranged to control the voltage between the first and second input terminals based on the input current.

5.  A converter according to claim 4, **characterized in that** the converter comprises a maximum power point tracking device adapted to provide a voltage reference for the input voltage.

6.  A converter according to any one of the previous claims 1 to 5, **characterized in that** the semiconductor component pairs ($S_1$, $S_3$ and $S_2$, $S_4$) receive the same control.

7.  A converter according to any one of the previous claims 1 to 5, **characterized in that** the semiconductor component pairs ($S_1$, $S_3$ and $S_2$, $S_4$) receive different control and the semiconductor components $S_2$ and $S_4$ are adapted to control the voltage of the series connection of first and second capacitors ($C_1$, $C_2$).

8.  A converter according to claim 7, **characterized in that** the converter further comprises a controlled inverter ($S_5$, $S_6$, $S_7$, $S_8$) connected to the output terminals of the converter for feeding power to a single phase alternating grid,
    means for determining the polarity of the voltage of the grid (105),
    means for producing a signal representing the pulse shape of the rectified grid voltage (105),
    means for determining the peak voltage of the grid voltage (105), means for controlling the voltage of the sum of the first and second capacitor such that current can be fed to the grid,
    means for controlling semiconductor components ($S_2$, $S_4$) such that the output current from the controlled inverter is in phase with the grid voltage.

9.  A method for controlling the converter according to any one of the previous claims 1 to 8, **characterized in that** the method comprises

measuring the input current ($i_{in}$) and input voltage ($U_{in}$),
generating a voltage reference ($U_{in\text{-}ref}$) for the input voltage, and
controlling semiconductor components ($S_1$, $S_3$) in response to the measured voltage and voltage reference.

**10.** A method for controlling the converter according to claim 8, **characterized in that** the method comprises
measuring the input current ($i_{in}$) and input voltage ($U_{in}$),
generating a voltage reference ($U_{in\text{-}ref}$) for the input voltage,
controlling semiconductor components ($S_1$, $S_3$) in response to the measured voltage and voltage reference,
measuring the grid voltage ($U_{grid}$),
rectifying and scaling the grid voltage,
measuring the voltage ($U_{im}$) of the series connection of first and second capacitor,
producing a reference value ($U_{im\text{-}ref}$) for the voltage of the mentioned series connection of capacitors,
measuring the current ($i_{|AC|}$) of the output of the converter, controlling the semiconductor components ($S_2$, $S_4$) based on the measured voltage ($U_{im}$) of the series connection of the capacitors, the reference value ($U_{im\text{-}ref}$) for the voltage of the mentioned series connection of capacitors, the rectified and scaled grid voltage ($k|U_{grid}|$) and the measured output current ($i_{|AC|}$) of the converter for producing output current from the controlled inverter that has the same phase and shape as the grid voltage.

FIG 1

FIG 2

FIG 3

FIG 4

FIG 5

FIG 6

FIG 7

FIG 8

16

FIG 9

FIG 10

FIG 11

FIG 12

FIG 13

FIG 14

**EUROPEAN SEARCH REPORT**

Application Number

EP 10 16 9229

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | J. LEPPÄAHO, T. SUNTIO: "Solar-Generator-Interfacing with a Current-Fed Superbuck Converter Implemented by Duality-Transformation Methods", THE 2010 INTERNATIONAL POWER ELECTRONICS CONFERENCE, 21 June 2010 (2010-06-21), - 24 June 2010 (2010-06-24), pages 680-687, XP002614810, Sapporo DOI: 10.1109/IPEC.2010.5543658 ISBN: 978-1-4244-5394-8 * the whole document * ----- | 1-10 | INV. H02M3/335 |
| Y | WO 2009/051853 A1 (AND LLC [US]; LEDENEV ANATOLI [US]; PORTER ROBERT M [US]) 23 April 2009 (2009-04-23) * figure 5B * ----- | 1-10 | |
| Y | US 2005/180175 A1 (TORREY DAVID A [US] ET AL) 18 August 2005 (2005-08-18) * paragraphs [0038], [0039] * ----- | 8 | TECHNICAL FIELDS SEARCHED (IPC) H02M H02J |

The present search report has been drawn up for all claims

| Place of search | Date of completion of the search | Examiner |
|---|---|---|
| Munich | 3 January 2011 | Hanisch, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 10 16 9229

This annex lists the patent family members relating to the patent documents cited in the above-mentioned European search report.
The members are as contained in the European Patent Office EDP file on
The European Patent Office is in no way liable for these particulars which are merely given for the purpose of information.

03-01-2011

| Patent document cited in search report | | Publication date | Patent family member(s) | | Publication date |
|---|---|---|---|---|---|
| WO 2009051853 | A1 | 23-04-2009 | CA | 2702392 A1 | 23-04-2009 |
| | | | CN | 101904073 A | 01-12-2010 |
| | | | CN | 101904015 A | 01-12-2010 |
| | | | EP | 2212983 A1 | 04-08-2010 |
| | | | EP | 2208236 A1 | 21-07-2010 |
| | | | US | 2009218887 A1 | 03-09-2009 |
| | | | US | 2010038968 A1 | 18-02-2010 |
| | | | US | 2010308662 A1 | 09-12-2010 |
| | | | US | 2010253150 A1 | 07-10-2010 |
| | | | US | 2010229915 A1 | 16-09-2010 |
| | | | WO | 2009051854 A1 | 23-04-2009 |
| | | | WO | 2009051870 A1 | 23-04-2009 |
| US 2005180175 | A1 | 18-08-2005 | NONE | | |

EPO FORM P0459

For more details about this annex : see Official Journal of the European Patent Office, No. 12/82